# FASCICULE DE BREVET EUROPEEN

(11) **EP 3 368 420 B1**
(45) Date de publication et mention de la délivrance du brevet: **30.09.2020**
(21) Numéro de dépôt: 16806234.7
(22) Date de dépôt: 27.10.2016
(51) Int. Cl.: B64G 1/26, B64G 1/40, F42B 10/66

(54) **SYSTÉME DE PILOTAGE EN FORCE ET DE CONTRÔLE D'ATTITUDE A COMPACITÉ AUGMENTÉE ET ENGIN COMPORTANT UN TEL SYSTÈME**
KOMPAKTERES DIREKTSCHUBFLUGSTEUERUNGS- UND LAGESTEUERUNGSSYSTEM UND FLUGZEUG MIT SOLCH EINEM SYSTEM
MORE COMPACT DIRECT THRUST FLIGHT CONTROL AND ATTITUDE CONTROL SYSTEM, AND CRAFT COMPRISING SUCH A SYSTEM

(30) Priorité: 28.10.2015 FR 1502275
(43) Date de publication de la demande: 05.09.2018
(73) Titulaire: ARIANEGROUP SAS, 75015 Paris (FR)
(72) Inventeur: CAUBET, Pascal, 33160 Saint Medard en Jalles (FR); CLERMONT, Matthieu, 33680 Saumos (FR)
(74) Mandataire: Cabinet Beau de Loménie
(86) Numéro de dépôt international: PCT/FR2016/052801
(87) Numéro de publication internationale: WO 2017/072457

(56) Documents cités:
- JP-A- H0 972 700
- US-A- 3 167 912
- US-A1- 2004 245 371
- US-A1- 2013 014 491
- US-A1- 2014 145 038

## Description

### Arrière-plan de l'invention

L'invention concerne un système pour le pilotage en force et le contrôle d'attitude en vol d'un véhicule, ou DACS ("Divert and Attitude Control System").

L'invention est notamment applicable à des parties hautes, ou parties terminales de missiles intercepteurs utilisés pour la défense antimissiles balistiques, afin d'assurer le maintien de la trajectoire désirée et de l'attitude en fin de mission. L'invention peut toutefois être utilisée pour d'autres types de véhicules aériens ou spatiaux, par exemple pour des missiles de défense anti-aérienne, des missiles air-air, des véhicules de rentrée atmosphérique ou encore des modules d'exploration spatiale.

Un système DACS connu pour un véhicule constituant la partie terminale d'un missile intercepteur est montré très schématiquement sur la figure 1. Ce système DACS 1, qui est divulgué dans le document US 2014/0109552, comprend un corps de propulseur 2 renfermant un bloc de propergol solide 3, un premier ensemble 4 de vannes de correction d'attitude (« ACS ») situé à l'arrière du corps de propulseur 2, un deuxième ensemble 5 de vannes de pilotage en force ou déviation de trajectoire (« Divert ») situé à l'avant du corps de propulseur 2. Dans ce système DACS, le premier ensemble 4 de vannes et le deuxième ensemble 5 de vannes sont alimentés à partir du même bloc de propergol solide 3, ce qui ne permet pas un découplage dans le contrôle de la poussée entre la correction d'attitude et le pilotage en force du véhicule.

Le document US 7 102 113 divulgue un système DACS dans lequel des premier et deuxièmes ensembles de vannes respectivement dédié au contrôle d'attitude et au pilotage en force sont alimentés en gaz de façon indépendante par des blocs de propergol distincts. Cependant, cette architecture à chambre de combustion indépendante entraîne une augmentation de l'encombrement du système DACS dans le véhicule.

Le document US 2013/0014491 divulgue un système DACS avec deux réservoirs de propergol solide imbriqués l'un dans l'autre.

Or, il existe un besoin pour un système DACS à chambre de combustion indépendante présentant un encombrement réduit.

### Objet et résumé de l'invention

A cet effet, la présente invention propose un système pour le pilotage en force et le contrôle d'attitude en vol d'un véhicule, comprenant un corps de propulseur et une pluralité de vannes réparties en un premier et un deuxième ensemble de vannes, comprenant en outre :
- un premier réservoir formant une première chambre de combustion, le premier réservoir étant délimité par une première enceinte sensiblement cylindrique présente au centre du corps du propulseur et s'étendant suivant un axe longitudinal dudit corps de propulseur, le premier réservoir étant fermé à une première extrémité et ouvert à une deuxième extrémité, le premier réservoir renfermant un premier chargement de propergol solide ayant au moins une face de combustion exposée au niveau de la deuxième extrémité dudit premier réservoir, le premier réservoir étant en communication avec le premier ensemble de vannes, et
- un deuxième réservoir formant une deuxième chambre de combustion, le deuxième réservoir étant délimité entre la première enceinte sensiblement cylindrique et une deuxième enceinte sensiblement cylindrique présente autour de ladite première enceinte et s'étendant suivant l'axe longitudinal du corps du propulseur, le deuxième réservoir étant fermé à une première extrémité et ouvert à une deuxième extrémité, le deuxième réservoir renfermant un deuxième chargement de propergol solide ayant au moins une face de combustion exposée au niveau de la deuxième extrémité dudit deuxième réservoir, le deuxième réservoir étant en communication avec le deuxième ensemble de vannes.

Par rapport aux systèmes DACS connus décrits plus haut, le système selon l'invention avec deux réservoirs de propergol solide imbriqués l'un dans l'autre est avantageux en ce qu'il permet d'alimenter en gaz de façon totalement indépendante le module de correction d'attitude ACS et le module de pilotage en force ou déviation de trajectoire Divert tout en permettant d'obtenir un système DACS d'une très grande compacité.

L'indépendance des premier et deuxième réservoirs permet une meilleure optimisation des points de fonctionnement (pression, durée de combustion, instants d'allumage, etc.) des modules ACS et Divert en ce que les premier et deuxième ensembles de vannes constituant respectivement un module ACS et un module Divert ou inversement peuvent être alimentés par des chargements de propergol solide différents dans leur structure et leur nature.

L'architecture imbriquée des deux réservoirs permet également de réduire la masse inerte du moteur. En outre, l'utilisation de chargements de propergol solide à combustion frontale permet de réduire la masse d'imbrûlés.

La géométrie sensiblement cylindrique du premier réservoir, d'une part, et une géométrie annulaire du deuxième réservoir, d'autre part, simplifient la réalisation du ou des blocs de propergol solide destinés à être utilisés dans ces réservoirs tout en autorisant une évolution de surface de combustion constante, ce qui facilite l'obtention d'un niveau de débit/poussée équilibré tout au long de la mission simplifiant ainsi le pilotage du système DACS.

De préférence, le premier et le deuxième ensembles de vannes sont disposés à distance l'un de l'autre respectivement vers l'avant et vers l'arrière du corps de propulseur, de façon sensiblement symétrique par rapport au centre de gravité du véhicule situé sur l'axe longitudinal du corps du propulseur.

Selon une caractéristique particulière du système DACS de l'invention, la première extrémité du premier réservoir à travers laquelle la face de combustion du premier chargement de propergol est exposée et la première extrémité du deuxième réservoir à travers laquelle la face de combustion du deuxième chargement de propergol est exposée sont disposées à distance l'une de l'autre respectivement vers l'avant et vers l'arrière du corps de propulseur, de façon sensiblement symétrique par rapport au centre de gravité du véhicule situé sur l'axe longitudinal du corps du propulseur. Dans cette configuration, les premier et deuxième chargements de propergol solide brûlent dans un sens opposé, ce qui permet de limiter les variations de position du centre de gravité en cours de fonctionnement du système.

Selon une autre caractéristique particulière du système DACS de l'invention, le premier chargement de propergol solide peut présenter une vitesse de combustion différente de la vitesse de combustion du deuxième chargement de propergol solide. Il est ainsi possible dans ce cas d'avoir des pressions différentes dans les premier et deuxième réservoirs et par, conséquent, des poussées différentes ajustées pour chacun des modules Divert et ACS ainsi qu'une optimisation de la messe du système complet.

De préférence, les surfaces des premier et deuxième chargements de propergol solide autres que celles correspondant aux faces de combustion sont recouvertes par une couche de matériau inhibiteur.

Selon une autre caractéristique particulière du système DACS de l'invention, le premier chargement de propergol solide comprend plusieurs segments de propergol solide, les segments étant séparés les uns des autres par une couche de matériau inhibiteur. De manière alternative ou cumulative, le deuxième chargement de propergol solide peut comprendre plusieurs segments de propergol solide, les segments étant séparés les uns des autres par une couche de matériau inhibiteur. Il est ainsi possible de faire fonctionner le module Divert et/ou le module ACS en mode pulsé.

Selon encore une autre caractéristique particulière du système DACS de l'invention, le premier réservoir est en communication avec le premier ensemble de vannes via une rallonge. On augmente ainsi le bras de levier lors de l'actionnement des vannes du premier ensemble de vannes.

### Brève description des dessins

L'invention sera mieux comprise à la lecture de la description faite ci-après, à titre indicatif mais non limitatif, en référence aux dessins annexés sur lesquels :
- la figure 1, déjà décrite, montre très schématiquement une partie terminale de missile intercepteur équipé d'un système DACS de l'art antérieur,
- la figure 2 montre très schématiquement un missile intercepteur ayant une partie terminale équipée d'un système DACS selon un mode de réalisation de l'invention ;
- les figures 3 à 7 montrent à plus grande échelle la partie terminale du missile de la figure 2, respectivement vue de côté, vue en coupe, vue de l'arrière, vue de l'avant et vue en éclatée ;
- les figures 8 et 9 sont des vues respectivement en coupe et en éclatée d'un système DACS selon un autre mode de réalisation de l'invention ;
- la figure 10 est une vue en coupe d'un système DACS selon un autre mode de réalisation de l'invention ;
- la figure 11 est une vue en coupe d'un système DACS selon un autre mode de réalisation de l'invention.

### Description détaillée de modes de réalisation

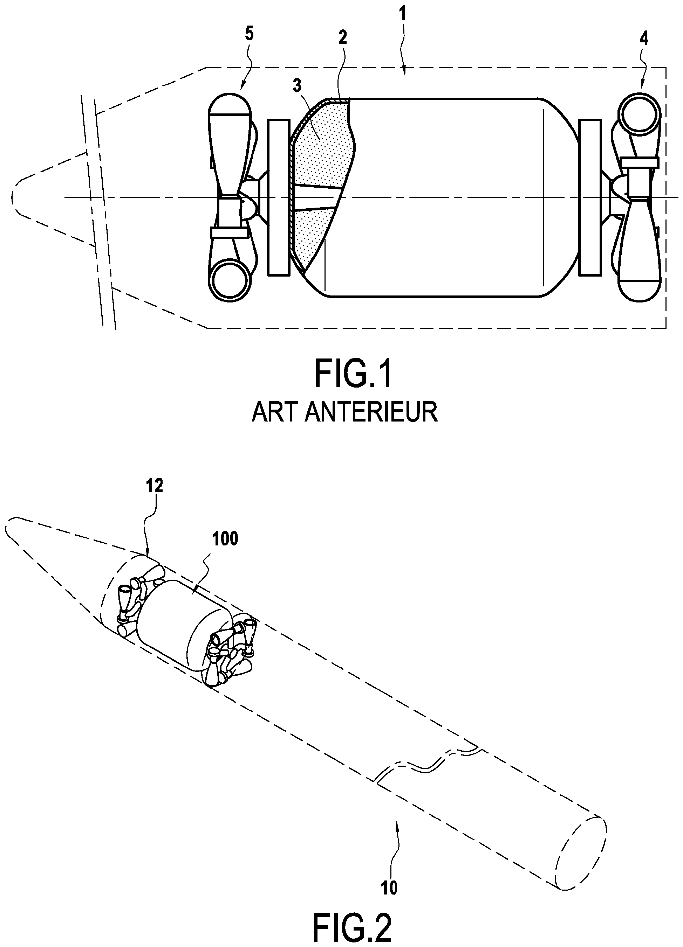

La figure 2 montre très schématiquement un missile intercepteur 10 destiné à la défense anti-missile balistique, ayant une partie haute ou partie terminale 12 équipée d'un système DACS 100 pour piloter la partie terminale 12 par déviation éventuelle de trajectoire et correction éventuelle d'attitude en fin de mission après séparation du reste du missile.

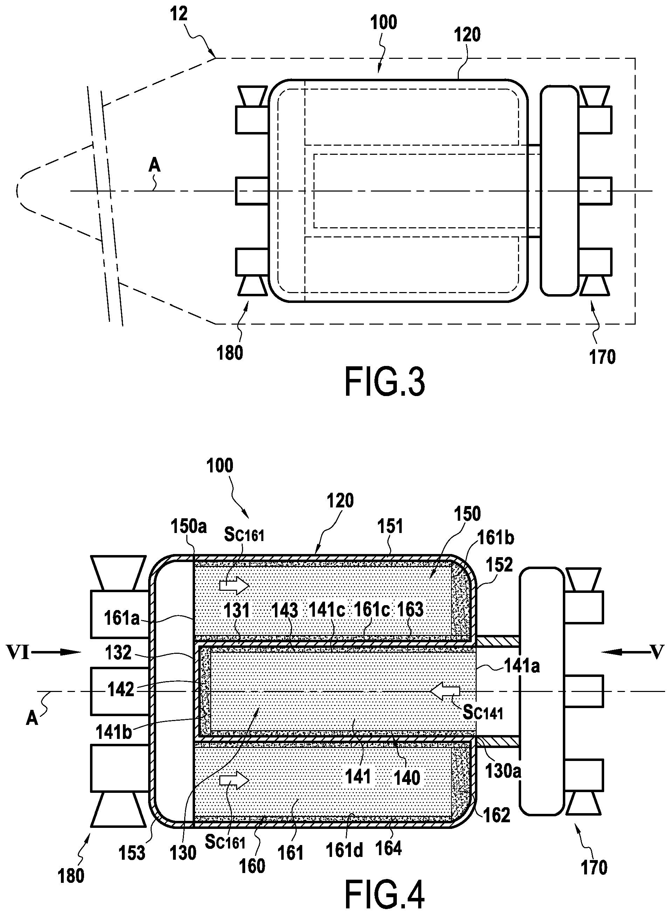

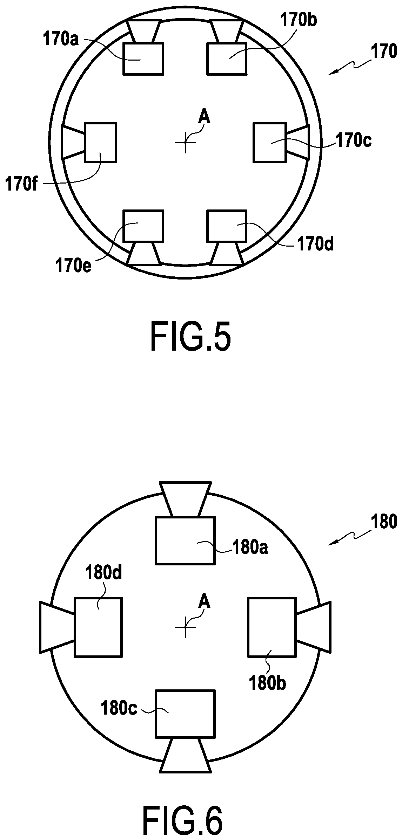

Le système DACS 100 (figures 3 à 7) comprend un corps de propulseur 120 comprenant un premier réservoir 130 délimité par une première enceinte sensiblement cylindrique 131 présente au centre du corps du propulseur 120 et s'étendant suivant un axe longitudinal A du corps de propulseur. Le premier réservoir 130 est fermé à son extrémité avant par un fond 132 et ouvert à son extrémité arrière 130a. Les termes "arrière" et "avant" sont utilisés en référence au sens de déplacement de la partie terminale 12. Le premier réservoir 130 renferme un premier chargement de propergol solide 140 ayant une face de combustion 141a exposée au niveau de l'extrémité arrière du premier réservoir 130. La face de combustion 141a s'étendant dans une direction perpendiculaire à l'axe longitudinal A.

Le corps de propulseur 120 comprend également un deuxième réservoir 150 délimité entre la première enceinte sensiblement cylindrique 131 et une deuxième enceinte sensiblement cylindrique 151 présente autour de la première enceinte cylindrique 131 et s'étendant suivant l'axe longitudinal A du corps du propulseur, les enceintes 131 et 151 étant ici concentriques. Le deuxième réservoir 150 est fermé à son extrémité arrière par un fond 152 constituant le fond arrière du corps de propulseur 120 et ouvert à son extrémité avant 150a. Le deuxième réservoir 150 renferme un deuxième chargement de propergol solide 160 ayant une face de combustion 161a exposée au niveau de l'extrémité avant 150a du deuxième réservoir 150. La face de combustion 161a s'étendant dans une direction perpendiculaire à l'axe longitudinal A.

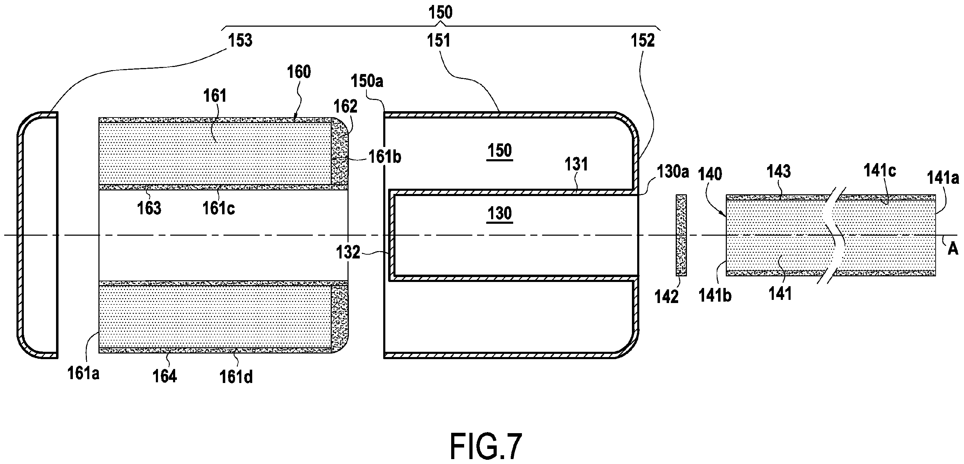

Le corps de propulseur 120 est ici formé par la deuxième enceinte sensiblement cylindrique 151 qui est fermée dans sa partie aval par le fond arrière 152 et dans sa partie amont par un fond 153 constituant le fond avant du corps de propulseur 120 (figures 4 et 7).

Le système DACS 100 comprend en outre un premier ensemble 170 de vannes situé à l'arrière du corps de propulseur 120 et un deuxième ensemble 180 de vannes situé à l'avant du corps de propulseur 120. Les vannes du premier ensemble de vanne 170 sont en communication avec le premier réservoir 130 tandis que les vannes du deuxième ensemble de vannes 180 sont en communication avec le deuxième réservoir 150. Le système DACS comprend un dispositif électronique de commande (non représenté) permettant de commander sélectivement l'ouverture et la fermeture des vannes du premier et du deuxième ensemble de vannes au moyen d'actionneurs (non représentés).

Le premier chargement de propergol solide 140 est de type bloc à combustion frontale. A cet effet, dans l'exemple décrit ici, il est constitué d'un bloc unique de propergol solide 141 présentant une forme cylindrique et dont les surfaces autres que la face de combustion 141a sont recouvertes d'un matériau inhibiteur. Plus précisément, la face 141b du bloc 141 opposée à la face 141a est recouverte d'une couche de matériau inhibiteur 142 tandis que la surface externe du bloc 141c en regard de la surface interne de la première enceinte cylindrique 131 est recouverte d'une couche de matériau inhibiteur 143. Les couches de matériau inhibiteur 142 et 143 peuvent être fabriquées indépendamment les unes des autres et rapportées sur le bloc de propergol solide 141 ou appartenir une structure de matériau inhibiteur monobloc, le bloc de propergol solide 141 étant alors introduit à l'intérieur de la structure monobloc. Un premier système d'allumage (non représenté) est présent afin d'initier la combustion du bloc de propergol solide 141 à partir de la face de combustion 141a.

Le deuxième chargement de propergol solide 160 est de type bloc à combustion frontale. A cet effet, dans l'exemple décrit ici, il est constitué d'un bloc unique de propergol solide 161 présentant une forme annulaire et dont les surfaces autres que la face de combustion 161a sont recouvertes d'un matériau inhibiteur. Plus précisément, la face 161b du bloc 161 opposée à la face 161a est recouverte d'une couche de matériau inhibiteur 162 tandis que les surfaces interne 161ç et externe 161d du bloc 161 en regard respectivement de la surface externe de la première enceinte sensiblement cylindrique 131 et de la surface interne de la deuxième enceinte sensiblement cylindrique 151 sont recouvertes respectivement d'une couche de matériau inhibiteur 163 et d'une couche de matériau inhibiteur 164. Les couches de matériau inhibiteur 162, 163 et 164 peuvent être fabriquées indépendamment les unes des autres et rapportées sur le bloc de propergol solide 161 ou appartenir une structure de matériau inhibiteur monobloc, le bloc de propergol solide 161 étant alors introduit à l'intérieur de la structure monobloc. Un deuxième système d'allumage (non représenté) est présent afin d'initier la combustion du bloc de propergol solide 161 à partir de la face de combustion 161a.

Les premier et deuxième réservoirs 130 et 150 forment une première et une deuxième chambres de combustion alimentant en gaz de façon indépendante respectivement les premier et deuxième ensembles de vannes 170 et 180.

Plus précisément, dans l'exemple décrit ici, le premier ensemble de vannes 170 correspond au module de correction d'attitude ACS et comprend six vannes 170a, 170b, 170c, 170d, 170e et 170f directement montées sur le fond 152 constituant le fond arrière du corps de propulseur 120. Le premier ensemble de vannes 170 comprend une première paire de vannes 170a et 170b orientées dans une première direction sensiblement perpendiculaire à l'axe A, une deuxième paire de vannes 170d et 170e orientées dans une deuxième direction opposée à la première direction, ainsi que deux autres vannes 170c et 170f orientées dans des directions opposées l'une à l'autre et sensiblement perpendiculaires à l'axe A et à la première et la deuxième direction. Un dispositif de commande (non illustré) comprenant une électronique de commande et des actionneurs est prévu pour commander de façon sélective l'ouverture d'une ou plusieurs des vannes 170a, 170b, 170c, 170d, 170e et 170f lorsqu'une correction d'attitude est requise (correction de lacet, roulis et/ou tangage). Le bloc de propergol solide 141 est utilisé uniquement pour alimenter les vannes 170a, 170b, 170c, 170d, 170e et 170f.

Toujours dans l'exemple décrit ici, le deuxième ensemble de vannes 180 correspond au module de pilotage en force ou déviation de trajectoire Divert et comprend quatre vannes 180a, 180b, 180c et 180d directement montées sur le fond 153 constituant le fond avant du corps de propulseur 120. Les vannes 180a, 180b, 180c et 180d sont disposées régulièrement autour de l'axe A du véhicule 10, sensiblement au niveau de son centre de gravité, de manière à générer des poussées latérales perpendiculairement à l'axe A, sans perturbation importante de l'attitude du véhicule 10. Un dispositif de commande (non illustré) comprenant une électronique de commande et des actionneurs est prévu pour commander de façon sélective l'ouverture d'une ou plusieurs des vannes 180a, 180b, 180c et 180d lorsqu'une déviation de trajectoire est requise. Le bloc de propergol solide 161 est utilisé uniquement pour alimenter les vannes 180a, 180b, 180c et 180d.

Dans l'exemple illustré, les premier et deuxième ensembles de vannes 170 et 180 sont disposés symétriquement par rapport au centre de gravité de l'ensemble de la partie terminale 12, le centre de gravité étant situé sur l'axe A. La charge utile et les différents équipements de la partie terminale 12 sont de préférence agencés pour que la position du centre de gravité reste sensiblement inchangée au fur et à mesure de la combustion du propergol.

Les premier et deuxième ensembles de vannes 170 et 180 sont situés à distance l'un de l'autre le long de l'axe A pour pouvoir générer des poussées latérales avec un moment de forces approprié en cas notamment de correction de tangage ou de lacet. Avantageusement, les vannes 170a, 170b, 170c, 170d, 170e, 170f 180a, 180b, 180c et 180d sont toutes identiques, ce qui simplifie la définition et la réalisation du système DACS. Une telle simplification résulte aussi du montage des vannes à l'extérieur du corps de propulseur 120, ce montage assurant par ailleurs une bonne sécurité pyrotechnique. Avantageusement aussi, mais non nécessairement, les axes de poussée de toutes les vannes sont situés à même distance de l'axe A.

De façon en soi connue, le dispositif de commande (non représenté) agit sur des actionneurs (non représentés) associés respectivement aux différentes vannes des premier et deuxième ensembles de vannes 170 et 180, c'est-à-dire la section de passage des gaz dans des conduites reliant les vannes au corps de propulseur, les vannes étant donc à ouverture variable commandée entre fermeture totale et pleine ouverture.

Comme illustré sur la figure 4, le bloc 141 du premier chargement de propergol solide 140 brûle dans un sens indiqué par la flèche Sc141 tandis que le bloc 161 du deuxième chargement de propergol solide 160 brûle dans un sens opposé indiqué par les flèches Sc161, ce qui permet de limiter la variation du centre de gravité du système DACS lors de son fonctionnement.

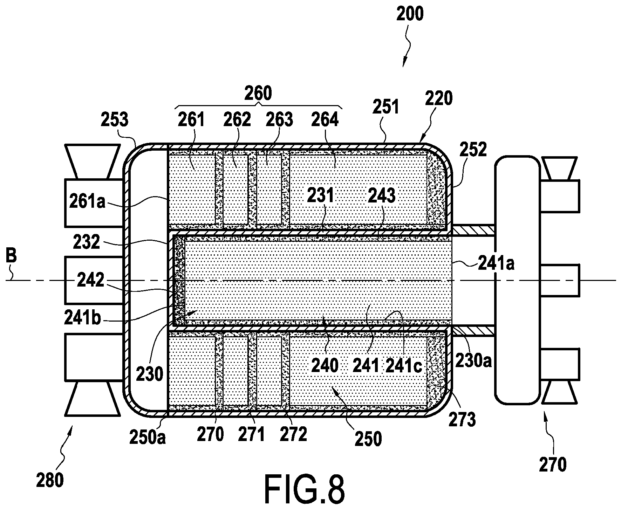

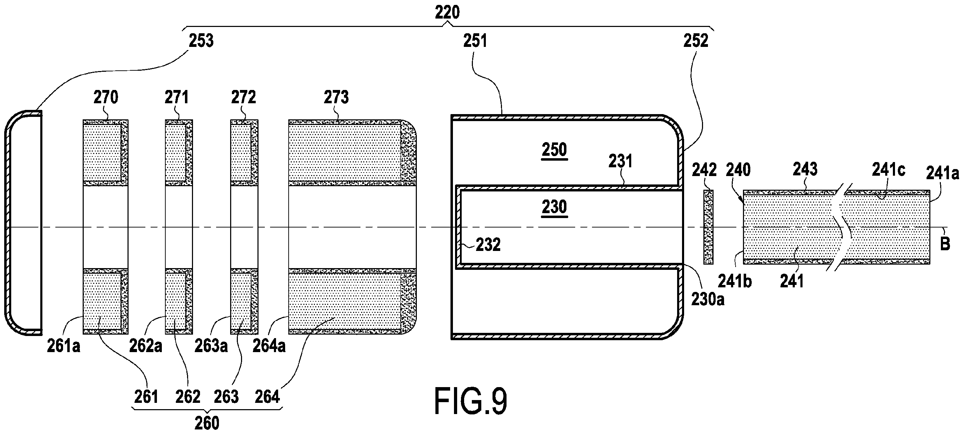

Les figures 8 et 9 illustrent un système DACS 200 qui diffèrent du système DACS 100 décrit précédemment en ce que le chargement de propergol solide destiné à alimenter le module de pilotage en force ou déviation de trajectoire Divert est segmenté en une pluralité de blocs de propergol solide permettant un fonctionnement de ce module en mode pulsé. De même que pour le système DACS 100 déjà décrit, le système DACS 200 comprend un corps de propulseur 220 comprenant un premier réservoir 230 délimité par une première enceinte sensiblement cylindrique 231 s'étendant suivant un axe longitudinal B du corps de propulseur. Le premier réservoir 230 est fermé à son extrémité avant par un fond 232 et ouvert à son extrémité arrière 230a. Le premier réservoir 230 renferme un premier chargement de propergol solide 240 ayant une face de combustion 241a exposée au niveau de l'extrémité arrière du premier réservoir 230.

Le corps de propulseur 220 comprend en outre un deuxième réservoir 250 délimité entre la première enceinte sensiblement cylindrique 231 et une deuxième enceinte sensiblement cylindrique 251 présente autour de la première enceinte 231 et s'étendant suivant l'axe longitudinal B du corps du propulseur, les enceintes 231 et 251 étant ici concentriques. Le deuxième réservoir 250 est fermé à son extrémité arrière par un fond 252 constituant le fond arrière du corps de propulseur 220 et ouvert à son extrémité avant 250a. Le deuxième réservoir 250 renferme un deuxième chargement de propergol solide 260.

Le corps de propulseurs 220 est ici formé par la deuxième enceinte sensiblement cylindrique 251 qui est fermée dans sa partie aval par le fond arrière 252 et dans sa partie amont par un fond 253 constituant le fond avant du corps de propulseur 220.

Le système DACS 200 comprend en outre des premier et deuxième ensembles de vannes 270 et 280 similaires aux premier et deuxième ensembles de vannes 170 et 180 décrit précédemment en relation avec le système DACS 100. Les vannes du premier ensemble de vannes 270 sont en communication avec le premier réservoir 230 tandis que les vannes du deuxième ensemble de vannes 280 sont en communication avec le deuxième réservoir 250. Le système DACS comprend un dispositif électronique de commande (non représenté) permettant de commander sélectivement l'ouverture et la fermeture des vannes du premier et du deuxième ensemble de vannes au moyen d'actionneurs (non représentés).

Le premier chargement de propergol solide 240 est de type bloc à combustion frontale. A cet effet, dans l'exemple décrit ici, il est constitué d'un bloc unique de propergol solide 241 présentant une forme cylindrique et dont les surfaces autres que la face de combustion 241a sont recouvertes d'un matériau inhibiteur. Plus précisément, la face 241b du bloc 241 opposée à la face 241a est recouverte d'une couche de matériau inhibiteur 242 tandis que la surface externe du bloc 241c en regard de la surface interne de la première enceinte sensiblement cylindrique 231 est recouverte d'une couche de matériau inhibiteur 243. Un premier système d'allumage (non représenté) est présent afin d'initier la combustion du bloc de propergol solide 241 à partir de la face de combustion 241a.

Le deuxième chargement de propergol solide 260 est constitué d'une pluralité de segments de propergol solide 261, 262, 263 et 264 présentant chacun une forme annulaire. Les segments de propergol solide 261, 262, 263 et 264 sont de type bloc à combustion frontale et présentent respectivement une face de combustion 261a, 262a, 263a et 264a. Le segment 261 a une face de combustion 261a exposée au niveau de l'extrémité avant 250a du deuxième réservoir 250.

La face du segment 261 opposée à la face 261a ainsi que les surfaces interne et externe du segment 261 en regard respectivement de la surface externe de la première enceinte sensiblement cylindrique 231 et de la surface interne de la deuxième enceinte sensiblement cylindrique 251 sont recouvertes d'une couche de matériau inhibiteur 270. Il en est de même pour les segments 262, 263 et 264 dont les faces opposées à la face de combustion et les surfaces interne et externe sont respectivement recouvertes par des couches de matériau inhibiteur 271, 272 et 273. Un système d'allumage individuel (non représenté) est associé à chacun des segments 261, 262, 263 et 264 afin d'initier la combustion de chaque segment de propergol de manière individuelle et gérer ainsi la combustion du chargement en mode pulsé.

Les premier et deuxièmes réservoirs 230 et 250 forment une première et une deuxième chambres de combustion alimentant en gaz respectivement les premier et deuxième ensembles de vannes 270 et 280. Comme déjà décrit précédemment pour le système DACS 100, le premier ensemble de vannes 270 correspond au module de correction d'attitude ACS dont les vannes sont directement montées sur le fond 252 constituant le fond arrière du corps de propulseur 220. Un dispositif de commande (non illustré) comprenant une électronique de commande et des actionneurs est prévu pour commander de façon sélective l'ouverture d'une ou plusieurs des vannes du premier ensemble de vannes 270 lorsqu'une correction d'attitude est requise (correction de lacet, roulis et/ou tangage). Le bloc de propergol solide 241 est utilisé uniquement pour alimenter les vannes du premier ensemble de vannes 270.

Le deuxième ensemble de vannes 280 correspond au module de pilotage en force ou déviation de trajectoire Divert dont les vannes sont directement montées sur le fond 253 constituant le fond avant du corps de propulseur 220. Un dispositif de commande (non illustré) comprenant une électronique de commande et des actionneurs est prévu pour commander de façon sélective l'ouverture d'une ou plusieurs des vannes du deuxième ensemble de vannes 280 lorsqu'une déviation de trajectoire est requise. Les segments de propergol solide 261, 262, 263 et 264 sont successivement brûlés pour alimenter uniquement les vannes du deuxième ensemble de vannes 280. Comme indiqué précédemment, l'utilisation d'un chargement sous forme segmenté permet un fonctionnement en mode pulsé, permettant ici d'alimenter les vannes du deuxième ensemble de vannes 280 suivant plusieurs puises de gaz, ici quatre. La durée de chaque pulse est définie en fonction de la longueur de chaque segment de propergol solide et/ou de la vitesse de combustion de chaque segment. Dans l'exemple décrit, les quatre segments 261, 262, 263 et 264 ont tous la même vitesse de combustion, le segment 264 ayant la plus grande longueur fournissant le pulse de gaz le plus long, suivi du segment 261 et des segments 262 et 263.

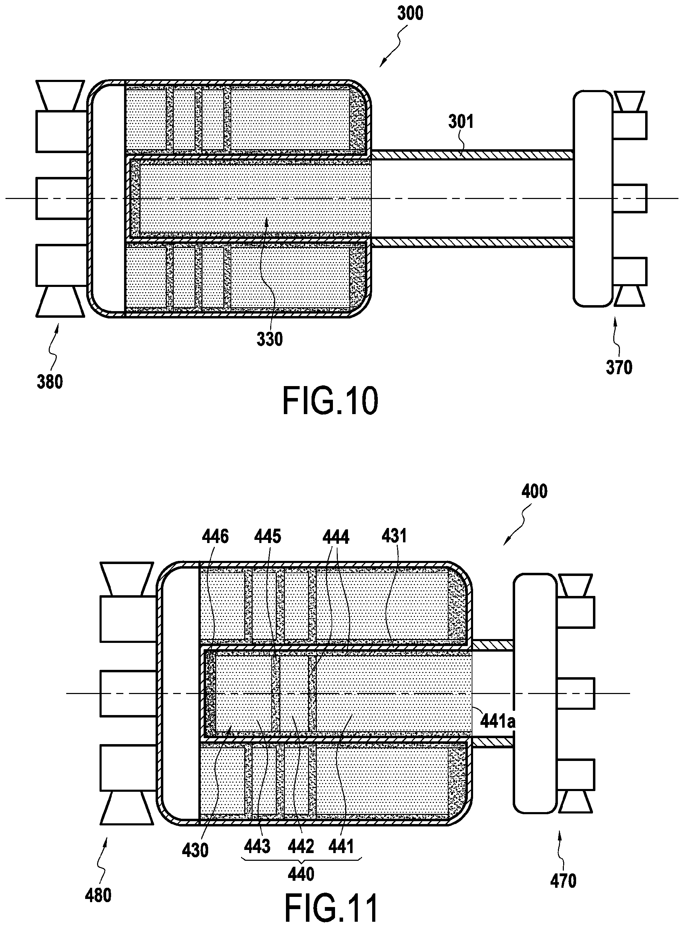

Les premier et deuxième ensembles de vannes 170 et 180 ou 270 ou 280 décrits précédemment sont montés respectivement directement sur le fond arrière et sur le fond avant du corps de propulseur 120 ou 220. Toutefois, les premier et deuxième ensembles de vannes peuvent être fixés sur un corps de distribution métallique ou en matériau composite lui-même montés sur le fond arrière ou sur le fond avant du corps de propulseur. Selon encore un autre variante de réalisation illustrée en figure 10, un système DACS 300 peut en outre comprendre une rallonge 301 en communication avec le premier réservoir 330 et le premier ensemble de vannes 370 permettant d'augmenter le bras de levier du module de correction d'attitude ACS formé par un premier ensemble de vannes 370, un deuxième ensemble de vannes 380 constituant le module de pilotage en force ou déviation de trajectoire Divert dont les vannes sont directement montées sur le fond avant du corps de propulseur. Les autres parties du système DACS 300 sont identiques à celles déjà décrites pour le système DACS 200 et ne seront pas décrites de nouveau pas souci de simplification.

En outre, le premier ensemble de vannes correspondant au module de correction d'attitude ACS peut être également alimenté en gaz de manière pulsée comme représenté par exemple sur la figure 11 qui montre un système DACS 400 qui diffère du système DACS 200 des figures 8 et 9 en ce que le premier chargement de propergol solide 440 destiné à alimenter en gaz un premier ensemble de vannes 470 constituant un module ACS est segmenté en une pluralité de blocs de propergol solide permettant un fonctionnement en mode pulsé. Le premier chargement de propergol solide 440 est constitué d'une pluralité de segments de propergol solide 441, 442 et 443 présentant chacun une forme cylindrique et étant de type bloc à combustion frontale.

La face du segment 441 opposée à la face de combustion 441a ainsi que les surfaces interne et externe du segment 441 en regard respectivement de la surface interne de la première enceinte cylindrique 431 sont recouvertes d'une couche de matériau inhibiteur 444. Il en est de même pour les segments 442 et 443 dont les faces opposées à la face de combustion et les surfaces internes sont respectivement recouvertes par des couches de matériau inhibiteur 445 et 446. Un deuxième système d'allumage (non représenté) est présent afin d'initier la combustion du segment de propergol solide 441 à partir de la face de combustion 441a. Un système d'allumage individuel (non représenté) est associé à chacun des segments 441, 442 et 443 afin d'initier la combustion de chaque segment de propergol de manière individuelle et gérer ainsi la combustion du chargement en mode pulsé.

La durée de chaque pulse est définie en fonction de la longueur de chaque segment de propergol solide et/ou de la vitesse de combustion de chaque segment. Dans l'exemple décrit, les trois segments 441, 442 et 443 ont tous la même vitesse de combustion, le segment 441 ayant la plus grande longueur fournissant le pulse de gaz le plus long, suivi du segment 443 et du segment 442.

Le bloc ou les segments de propergol solide constituant les premier et deuxième chargement du système DACS de l'invention peuvent libres, c'est-à-dire être insérés avec un jeu radial dans les premier et deuxième réservoirs et collés sur le matériau inhibiteur sur la face opposé à leur face de combustion ou coulés directement dans le réservoir protégé par une protection thermique alvéolée qui permet de réduire les contraintes mécaniques sur les blocs ou segments et leurs liaisons.

Le propergol solide utilisé pour alimenter en gaz le module de correction d'attitude ACS peut avoir une composition différente du propergol solide utilisé pour alimenter en gaz le module de pilotage en force ou déviation de trajectoire Divert de manière à avoir des vitesses de combustion différentes et, par conséquent, des poussées différentes. A titre d'exemple, le propergol solide utilisé pour alimenter en gaz le module Divert peut présenter une vitesse de combustion 2 à 3 fois plus élevée que celle du propergol solide utilisé pour alimenter en gaz le module ACS.

Dans les exemples décrits ci-dessus les premier et deuxième ensembles de vannes sont respectivement placés aux deux extrémités du corps de propulseur. Cependant, dans le système pour le pilotage en force et le contrôle d'attitude en vol d'un véhicule de l'invention, un des deux ensembles de vannes peut être placé à une position intermédiaire sur le corps de propulseur. A titre d'exemple, le premier réservoir chargé peut être organisé en deux modules symétriques et l'ensemble de vannes correspondant au module de pilotage en force ou déviation de trajectoire Divert peut être placé sur le corps de propulseur au voisinage du centre de gravité du premier réservoir chargé (l'ensemble de vannes sera fixé sur une couronne centrale reliée aux deux modules symétriques du premier réservoir).

## Revendications

1. Système pour le pilotage en force et le contrôle d'attitude en vol d'un véhicule (10), comprenant un corps de propulseur (120) et une pluralité de vannes réparties en un premier et un deuxième ensemble de vannes (170, 180), comprenant :
- un premier réservoir (130) formant une première chambre de combustion, le premier réservoir étant délimité par une première enceinte sensiblement cylindrique (131) présente au centre du corps du propulseur et s'étendant suivant un axe longitudinal (A) dudit corps de propulseur, le premier réservoir (130) étant fermé à une première extrémité et ouvert à une deuxième extrémité (130a), le premier réservoir (130) renfermant un premier chargement de propergol solide (140) ayant au moins une face de combustion (141a) exposée au niveau de la deuxième extrémité (130a) dudit premier réservoir (130), le premier réservoir étant en communication avec le premier ensemble de vannes (170),
- un deuxième réservoir (150) délimité entre la première enceinte sensiblement cylindrique (131) et une deuxième enceinte sensiblement cylindrique (151) présente autour de ladite première enceinte et s'étendant suivant l'axe longitudinal (A) du corps du propulseur (120), le système étant **caractérisé en ce que** :
le deuxième réservoir (150) forme une deuxième chambre de combustion, le deuxième réservoir étant fermé à une première extrémité et ouvert à une deuxième extrémité (150a), le deuxième réservoir (150) renfermant un deuxième chargement de propergol solide (160) ayant au moins une face (161a) de combustion exposée au niveau de la deuxième extrémité (150a) dudit deuxième réservoir, le deuxième réservoir (150) étant en communication avec le deuxième ensemble de vannes (180).

2. Système selon la revendication 1, **caractérisé en ce que** le premier et le deuxième ensembles de vannes (170, 180) sont disposés à distance l'un de l'autre respectivement vers l'avant et vers l'arrière du corps de propulseur (120), de façon sensiblement symétrique par rapport au centre de gravité du véhicule (10) situé sur l'axe longitudinal (A) du corps du propulseur (120).

3. Système selon la revendication 1 ou 2, **caractérisé en ce que** la première extrémité (130a) du premier réservoir (130) à travers laquelle la face de combustion (141a) du premier chargement de propergol (140) est exposée et la première extrémité (150a) du deuxième réservoir (150) à travers laquelle la face de combustion (161a) du deuxième chargement de propergol (160) est exposée sont disposées à distance l'une de l'autre respectivement vers l'avant et vers l'arrière du corps de propulseur (120), de façon sensiblement symétrique par rapport au centre de gravité du véhicule situé sur l'axe longitudinal (A) du corps du propulseur (120).

4. Système selon l'une quelconque des revendications 1 à 3, **caractérisé en ce que** le premier chargement de propergol solide (140) présente une vitesse de combustion différente de la vitesse de combustion du deuxième chargement de propergol solide (160).

5. Système selon l'une quelconque des revendications 1 à 4, **caractérisé en ce que** les surfaces des premier et deuxième chargements de propergol solide (140, 160) autres que celles correspondant aux faces de combustion (141a, 161a) sont recouvertes par une couche de matériau inhibiteur (142, 143, 162, 163).

6. Système selon l'une quelconque des revendications 1 à 5, **caractérisé en ce que** le premier chargement de propergol solide (440) comprend plusieurs segments de propergol solide (441, 442, 443), les segments étant séparés les uns des autres par une couche de matériau inhibiteur (444, 445).

7. Système selon l'une quelconque des revendications 1 à 6, **caractérisé en ce que** le deuxième chargement de propergol solide (260) comprend plusieurs segments de propergol solide (261, 262, 263, 264), les segments étant séparés les uns des autres par une couche de matériau inhibiteur (270, 271, 272).

8. Système selon l'une quelconque des revendications 1 à 7, **caractérisé en ce que** le premier réservoir (330) est en communication avec le premier ensemble de vannes (370) via une rallonge (301).

9. Engin aérien ou spatial comprenant un système selon l'une quelconque des revendications 1 à 8.

10. Missile (10) ayant une partie terminale (12) équipée d'un système selon l'une quelconque des revendications 1 à 8.

## Patentansprüche

1. Direktschubflugsteuerungs- und Lagesteuerungssystem eines Luftfahrzeugs (10), umfassend einen Antriebskörper (120) und eine Vielzahl von Ventilen, die in einer ersten und einer zweiten Ventilanordnung (170, 180) verteilt sind, umfassend:
- einen ersten Behälter (130), der eine erste Verbrennungskammer bildet, wobei der erste Behälter von einer ersten im Wesentlichen zylindrischen Hülle (131) begrenzt wird, die im Zentrum des Antriebskörpers vorhanden ist und sich in einer Längsachse (A) des genannten Antriebskörpers erstreckt, wobei der erste Behälter (130) an einem ersten Ende verschlossen ist und an einem zweiten Ende (130a) offen ist, wobei der erste Behälter (130) eine erste Ladung (140) von festem Treibstoff umfasst, der mindestens eine Verbrennungsfläche (141a) aufweist, die auf der Höhe des zweiten Endes (130a) des genannten ersten Behälters (130) freiliegt, wobei der erste Behälter mit der ersten Ventilanordnung (170) in Kommunikation steht,
- einen zweiten Behälter (150), der zwischen der ersten im Wesentlichen zylindrischen Hülle (131) und einer zweiten im Wesentlichen Hülle (151) begrenzt wird, die rund um die genannte erste Hülle vorhanden ist und sich in der Längsachse (A) des Antriebskörpers (120) erstreckt,
wobei das System **dadurch gekennzeichnet ist, dass**:
der zweite Behälter (150) eine zweite Verbrennungskammer bildet, wobei der zweite Behälter an einem ersten Ende verschlossen ist und an einem zweiten Ende (150a) offen ist, wobei der zweite Behälter (150) eine zweite Ladung (160) von festem Treibstoff umfasst, der mindestens eine Verbrennungsfläche (161a) aufweist, die auf der Höhe des zweiten Endes (150a) des genannten zweiten Behälters freiliegt, wobei der zweite Behälter (150) mit der zweiten Ventilanordnung (180) in Kommunikation steht.

2. System gemäß Anspruch 1, **dadurch gekennzeichnet, dass** die erste und die zweite Ventilanordnung (170, 180) in einer Distanz voneinander jeweils nach vorne und nach hinten von dem Antriebskörper (120) im Wesentlichen symmetrisch in Bezug auf den Schwerpunkt des Luftfahrzeugs (10) angeordnet sind, der auf der Längsachse (A) des Antriebskörpers (120) liegt.

3. System gemäß Anspruch 1 oder 2, **dadurch gekennzeichnet, dass** das erste Ende (130a) des ersten Behälters (130), quer durch welches die Verbrennungsfläche (141a) der ersten Ladung (140) von Treibstoff freiliegt, und das erste Ende (150a) des zweiten Behälters (150), quer durch welches die Verbrennungsfläche (161a) der zweiten Ladung (160) von Treibstoff freiliegt, in einer Distanz voneinander jeweils nach vorne und nach hinten von dem Antriebskörper (120) im Wesentlichen symmetrisch in Bezug auf den Schwerpunkt des Luftfahrzeugs angeordnet sind, der auf der Längsachse (A) des Antriebskörpers (120) liegt.

4. System gemäß einem der Ansprüche 1 bis 3, **dadurch gekennzeichnet, dass** die erste Ladung (140) von festem Treibstoff eine Verbrennungsgeschwindigkeit aufweist, die von der Verbrennungsgeschwindigkeit der zweiten Ladung (160) von festem Treibstoff verschieden ist.

5. System gemäß einem der Ansprüche 1 bis 4, **dadurch gekennzeichnet, dass** die anderen Flächen der ersten und zweiten Ladung (140, 160) von festem Treibstoff als jene, die den Verbrennungsflächen (141a, 161a) entsprechen, mit einer Schicht aus einem Inhibitormaterial (142, 143, 162, 163) bedeckt sind.

6. System gemäß einem der Ansprüche 1 bis 5, **dadurch gekennzeichnet, dass** die erste Ladung (440) von festem Treibstoff mehrere Segmente (441, 442, 443) von festem Treibstoff umfasst, wobei die Segmente voneinander durch eine Schicht aus einem Inhibitormaterial (444, 445) getrennt sind.

7. System gemäß einem der Ansprüche 1 bis 6, **dadurch gekennzeichnet, dass** die zweite Ladung (260) von festem Treibstoff mehrere Segmente (261, 262, 263, 264) von festem Treibstoff umfasst, wobei die Segmente voneinander durch eine Schicht aus einem Inhibitormaterial (270, 271, 272) getrennt sind.

8. System gemäß einem der Ansprüche 1 bis 7, **dadurch gekennzeichnet, dass** der erste Behälter (330) mit der zweiten Ventilanordnung (370) über eine Verlängerung (301) in Kommunikation steht.

9. Flug- oder Raumfahrzeug, umfassend ein System gemäß einem der Ansprüche 1 bis 8.

10. Rakete (10), mit einem Endteil (12), das mit einem System gemäß einem der Ansprüche 1 bis 8 ausgestattet ist.

## Claims

1. An in-flight side force steering and attitude control system (10) for a vehicle, the system comprising a thruster body (120) and a plurality of valves distributed in first and second valve sets (170, 180), comprising:
- a first tank (130) forming a first combustion chamber, the first tank being defined by a first substantially cylindrical enclosure (131) present at the center of the thruster body and extending along a longitudinal axis (A) of said thruster body, the first tank (130) being closed at a first end and open at a second end (130a), the first tank (130) containing a first solid propellant charge (140) having at least one combustion face (141a) exposed at the second end (130a) of said first tank (130), the first tank being in communication with the first valve set (170); and
- a second tank (150) defined between the first substantially cylindrical enclosure (131) and a second substantially cylindrical enclosure (151) present around said first enclosure and extending along the longitudinal axis (A) of the thruster body (120),
the system being **characterized in that** the second tank (150)forms a second combustion chamber, the second tank being closed at a first end and open at a second end (150a), the second tank (150) containing a second solid propellant charge (160) having at least one combustion face (161a) exposed at the second end (150a) of said second tank, the second tank (150) being in communication with the second valve set (180).

2. A system according to claim 1, **characterized in that** the first and second valve sets (170, 180) are arranged at a distance apart respectively towards the front and towards the rear of the thruster body (120) in substantially symmetrical manner relative to the center of gravity of the vehicle (10) situated on the longitudinal axis (A) of the thruster body (120).

3. A system according to claim 1 or claim 2, **characterized in that** the first end (130a) of the first tank (130) through which the combustion face (141a) of the first propellant charge (140) is exposed, and the first end (150a) of the second tank (150) through which the combustion face (161a) of the second propellant charge (160) is exposed, are arranged at a distance apart from each other, respectively towards the front and towards the rear of the thruster body (120), in a manner that is substantially symmetrical relative to the center of gravity of the vehicle situated on the longitudinal axis (A) of the thruster body (120).

4. A system according to any one of claims 1 to 3, **characterized in that** the first solid propellant charge (140) presents a combustion speed different from the combustion speed of the second solid propellant charge (160) .

5. A system according to any one of claims 1 to 4, **characterized in that** the surfaces of the first and second solid propellant charges (140, 160) other than their surfaces corresponding to the combustion faces (141a, 161a) are covered in a layer (142, 143, 162, 163) of inhibitor material.

6. A system according to any one of claims 1 to 5, **characterized in that** the first solid propellant charge (440) comprises a plurality of solid propellant segments (441, 442, 443), the segments being separated from one another by layers (444, 445) of inhibitor material.

7. A system according to any one of claims 1 to 6, **characterized in that** the second solid propellant charge (260) comprises a plurality of solid propellant segments (261, 262, 263, 264), the segments being separated from one another by layers (270, 271, 272) of inhibitor material.

8. A system according to any one of claims 1 to 7, **characterized in that** the first tank (330) is in communication with the first valve set (370) via an extender (301).

9. An air or space vehicle including a system according to any one of claims 1 to 8.

10. A missile (10) having a terminal portion (12) fitted with a system according to any one of claims 1 to 8.
